(19) Europäisches Patentamt
European Patent Office
Office européen des brevets

(11) Numéro de publication: **0 300 862**
**A2**

(12) # DEMANDE DE BREVET EUROPEEN

(21) Numéro de dépôt: **88401704.7**

(22) Date de dépôt: **01.07.88**

(51) Int. Cl.⁴: **C 08 G 77/60**
C 04 B 35/00

(30) Priorité: **10.07.87 FR 8709797**

(43) Date de publication de la demande:
**25.01.89 Bulletin 89/04**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Corriu, Robert**
**246, rue de l'Espérou**
**F-34100 Montpellier (FR)**

**Boury, Bruno**
**5, avenue des Bains**
**F-34540 Ballaruc (FR)**

**Carpenter, Leslie**
**2109 East Superior Street**
**Duluth Minnesota 55812 (US)**

(74) Mandataire: **Dubruc, Philippe et al**
**RHONE-POULENC INTERSERVICES Service Brevets**
**Chimie 25, quai Paul-Doumer**
**F-92408 Courbevoie Cédex (FR)**

(54) **Composition à base d'un nouveau polycarbosilane, sa préparation et son application à la fabrication de produits et articles céramiques à base de carbure de silicium.**

⑰ La présente invention a trait à un nouveau polymère du type polycarbosilane répondant à la formule moyenne suivante :

$$\left( \overset{H}{\underset{H}{|}}\!\!\!\!Si - CH_2 - CH_2 \right)_n$$

et utilisable plus particulièrement pour la fabrication de produits et articles céramiques à base de carbure de silicium, notamment sous forme de fibres.

Elle concerne également un procédé de préparation de ce polymère.

EP 0 300 862 A2

## Description

### COMPOSITION A BASE D'UN NOUVEAU POLYCARBOSILANE, SA PREPARATION ET SON APPLICATION A LA FABRICATION DE PRODUITS ET ARTICLES CERAMIQUES A BASE DE CARBURE DE SILICIUM

La présente invention a trait à une nouvelle composition de matière, essentiellement formée d'un nouveau polycarbosilane, et ci-après dénommée polycarbosilane selon l'invention.

Elle concerne également un procédé de fabrication de ce polycarbosilane.

Elle concerne enfin, à titre d'application, son utilisation dans la fabrication de produits et articles céramiques à base de carbure de silicium, notamment sous forme de fibres.

L'idée de préparer des produits céramiques, chargées ou non, à base de carbure de silicium à partir de composés d'organosilicium n'est pas nouvelle. Dans le cas de la préparation de produits céramiques contenant du carbure de silicium par dégradation thermique de polymères organosiliciques, de nombreux articles et brevets ont été publiés.

On connait ainsi par le brevet français n° 2 308 650, un procédé de préparation de polycarbosilanes par pyrolyse dans un autoclave de polysilanes obtenus par réaction, en milieu solvant (xylène) du sodium ou du lithium métalliques fondus sur du diméthyldichlorosilane. On peut alors chauffer les polycarbosilanes ainsi obtenus pour engendrer du carbure de silicium β.

Dans le cas particulier où l'on souhaite obtenir des fibres Si-C, le schéma de principe décrit dans ce document peut être résumé comme suit :

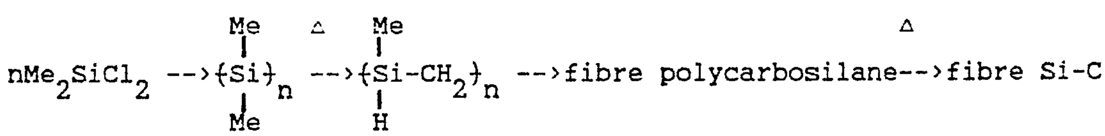


(Me = radical méthyle, △ = traitement thermique).

Cependant, un tel procédé présente plusieurs inconvénients tant au niveau de sa mise en oeuvre qu'au niveau des produits obtenus. D'une part, il nécessite d'utiliser des quantités très importantes de sodium fondu lors de l'étape de préparation des polysilanes (2 tonnes de Na par tonne de Si-C produit).

D'autre part, l'étape de transformation des polysilanes en polycarbosilanes exige des températures, des pressions et un temps de réaction très élevés ( θ : 400-470°C ; P : 80-110 atm ; t : 10-15 heures).

Enfin, les polycarbosilanes obtenus par ce procédé présentent des rendements pondéraux en matière céramique qui peuvent paraitre insuffisants (de l'ordre de 60 % en poids), compte tenu du rendement théorique susceptible d'être obtenu avec ce type de produits (70 % en poids).

Tous ces inconvénients rendent d'une part le procédé de préparation et d'autre part les précurseurs polycarbosilaniques décrits dans ce document, particulièrement mal adaptés à une production à l'échelle industrielle de matières céramiques à base de carbure de silicium.

La présente invention a donc pour but de résoudre les problèmes ci-dessus et de proposer des moyens simples, efficaces, économiques et de mise en oeuvre aisée, pour obtenir sous des formes les plus diverses (fils, articles moulés, revêtements, pellicules, etc...) des polycarbosilanes qui, lors de leur pyrolyse, donnent des produits céramiques avec un rendement pondéral élevé.

On a maintenant trouvé que l'on peut obtenir des rendements pondéraux élevés en matières céramiques à base de carbure de silicium grâce à la nouvelle composition de matière selon l'invention, composition de matière caractérisée en ce qu'elle est essentiellement formée d'un polycarbosilane répondant à la formule moyenne suivante :

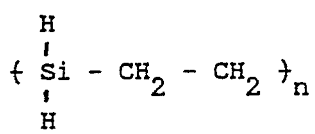

dans laquelle l'indice moyen n est au moins égal à 2.

Les polycarbosilanes selon l'invention présentent en effet, de façon totalement inattendue et surprenante eu égard aux polycarbosilanes du brevet FR 2 308 650 de stoechiométrie pourtant équivalente, des rendements pondéraux en Si-C pouvant atteindre 67 %, et même plus.

L'invention a également pour objet un procédé de préparation de polycarbosilanes tels que définis

ci-dessus. Le procédé selon l'invention est alors caractérisé en ce qu'il comprend les étapes suivantes:

(a) : on polymérise du dichlorovinylhydrogénosilane en présence d'une quantité catalytiquement efficace d'un métal ou d'un composé métallique catalysant la réaction d'hydrosilylation $\equiv$Si-H/$\equiv$Si-$CH=CH_2$

(b) : puis on réduit en milieu anhydre la composition obtenue en fin d'étape (a) au moyen d'un réducteur chimique permettant de substituer par des atomes d'hydrogène les atomes de chlore présents dans ladite composition.

Le procédé selon l'invention, outre le fait qu'il permet de s'affranchir d'utiliser des métaux fondus (lithium ou sodium) et de travailler sous des conditions opératoires très dures, obviant ainsi aux inconvénients inhérents à une telle mise en oeuvre, a également permis à la Demanderesse d'obtenir avec une excellente reproductibilité de nouveaux polycarbosilanes présentant lors de leur pyrolyse des rendements pondéraux en céramique tout à fait remarquables, ce qui les rend ainsi particulièrement bien adaptés à la fabrication d'articles moulés céramiques à base de carbure de silicium.

Mais d'autres caractéristiques et avantages de l'invention seront mieux compris à la lecture de la description qui va suivre et d'exemples concrets, mais non limitatifs, relatifs à sa mise en oeuvre.

Conformément au procédé de préparation des nouveaux polycarbosilanes de l'invention, le produit de départ utilisé est un dichlorovinylhydrogénosilane, de formule $CH_2=CH\text{-}SiHCl_2$.

Ce produit peut être préparé par tout moyen connu en soi, par exemple par chauffage d'un mélange à base de vinyltrichlorosilane, d'hexylsilane et de tributylamine (US-A-3646 091), ou par réaction du vinylméthoxydichlorosilane avec de l'hydrure de diéthyl-aluminium (FR-A-2 035 609), ou bien encore par réaction d'un dichlorosilane avec une quantité semi-stoechiométrique d'éthylène (FR-A-2 054 357).

Le dichlorovinylhydrogénosilane est un produit liquide, de sorte que l'on peut procéder à une polymérisation en masse de ce produit. Il est bien sûr tout à fait possible d'effectuer cette polymérisation en milieu solvant organique.

Cette polymérisation est de type catalytique, et correspond à une réaction d'hydrosilylation entre les groupements $\equiv$ Si-H et les groupements $\equiv$ $SiCH=CH_2$ du produit de départ. La température de la réaction n'est pas critique ; dans le cadre d'une polymérisation en masse, elle se situe généralement dans une fourchette allant de 50°C à 110°C ; en milieu solvant, la borne limitante correspond à la température de reflux du solvant (hexane : 68-69 °). Il est d'autre part préférable pour amorcer cette réaction de procéder à un léger chauffage de la masse réagissante.

On opère généralement à la pression atmosphérique ; bien entendu, des préssions supérieures ou inférieures ne sont pas exclues.

On peut utiliser comme catalyseur tout métal ou composé métallique, incluant les complexes métalliques, qui favorise efficacement l'addition des groupes $\equiv$ SiH au groupe $\equiv$ $SiCH\text{-}CH_2$.

On connait une grande diversité de tels catalyseurs qui comprennent certains composés carbonylés du fer, du nickel et du cobalt.

Le catalyseur est de préférence un métal du groupe du platine (platine, iridium, rhodium, ruthénium, osmium et palladium) introduit dans la composition sous forme d'une poudre fine métallique ou de préférence sous forme d'un complexe à la dose de 1 à 400 ppm, de préférence de 10 à 250 ppm calculés en poids de métal catalytique.

On peut utiliser comme catalyseur des complexes d'un métal du groupe du platine, notamment les complexes de platine-oléfine comme décrit dans les brevets US 3.159.601 et 3.159.662, les produits de réaction des dérivés du platine avec des alcools, des aldéhydes et des éthers décrits dans le brevet US 3.220.972, les catalyseurs platine-vinylsiloxane décrits dans les brevets français 1.313.846 et son addition 88 676 et le brevet français 1.480.409 ainsi que les complexes décrits dans les brevets US 3.715.334, 3.775.452 et 3.814.730, un catalyseur au rhodium tel que décrit dans les brevets US 3.296.291 et 3.928.629.

Les métaux préférés du groupe du platine sont le platine et le rhodium ; le ruthénium moins cher, est également utilisable.

A titre d'exemple, conviennent particulièrement bien les catalyseurs à base de $H_2PtCl_6$ ou bien ceux à base de $RhCl(P\varnothing_3)_3$ ($\varnothing$ = $C_6H_5$).

L'analyse montre que le produit obtenu en fin de polymérisation possède la stoechiométrie $SiC_2H_4Cl_2$ et est un polydichlorosiléthylène de formule moyenne :

$$\left( \begin{matrix} Cl \\ | \\ Si \\ | \\ Cl \end{matrix} -CH_2-CH_2 \right)_n$$

dans laquelle l'indice moyen n peut varier de 2 à 100, et plus particulièrement entre 6 et 10. Ce produit est un solide blanc, très peu soluble dans la plupart des solvants organiques usuels.

On réduit alors ce polydichlosiléthylène en substituant par des atomes d'hydrogène les atomes de chlore attachés aux atomes de silicium. Pour cela, on utilise un réducteur chimique en quantité au moins stoechiométrique relativement au chlore présent, la réduction s'effectuant en milieu anhydre, tel que d'éther.

A titre d'exemple de réducteurs, on peut citer notamment tous les composés contenant un hydrure, pour autant que ces derniers soient en mesure d'éliminer pratiquement tout le chlore contenu dans le polydichlorosiléthylène. Conviennent ainsi l'hydrure d'aluminium et de lithium, l'hydrure de bore et de sodium, ou l'hydrure de sodium. De préférence, on utilise l'hydrure d'aluminium et de lithium $LiAlH_4$. Pour un exposé détaillé des conditions de mise en oeuvre de ce type de composés, on pourra se reporter notamment au brevet FR 2 487 364.

On peut également utiliser un hydrure alcalin ou alcalino-terreux tel qu'un hydrure de lithium, un hydrure de calcium ou un hydrure de magnésium, en mélange avec au moins un agent séquestrant, selon un procédé tel que décrit dans le brevet FR 2 576 902. Dans ce cas, on utilisera avantageusement de l'hydrure de lithium LiH avec une tris (dioxa-3, 6 heptyl) amine de formule :

$N \{ CH_2-CH_2-O-CH_2-CH_2-O-CH_3)_3$

Après réaction complète et élimination des solvants, on obtient une huile visqueuse, claire et transparente, qui est soluble dans la plupart des solvants organiques usuels. La formule de ce produit a été déterminée par analyse infra-rouge (IR) et RMN ($H^1C^{13}Si^{29}$), et l'indice de polymérisation a été déterminé par chromatographie en phase gazeuse (GPC). Ainsi ce produit, de stoechiométrie $SiC_2H_6$, est un polydihydrogénosiléthylène de formule moyenne :

$$\{\overset{H}{\underset{H}{Si}}-CH_2-CH_2\}_n$$

dans laquelle l'indice n peut varier entre 2 et 100, et plus particulièrement entre 6 et 10.

L'un des avantages du polycarbosilane selon l'invention réside dans sa remarquable aptitude à donner par pyrolyse du carbure de silicium avec un très haut rendement pondéral ramené au produit de départ.

Une analyse par thermogravimétrie dynamique (TGA) menée sous azote de 0°C à 1000°C et couplée à une analyse IR et RX, montre qu'au cours du traitement thermique il y a tout d'abord départ de composés volatils (hydrogène, alcanes et alcènes en $C_1$-$C_4$) pour aboutir vers 850°C à du carbure de silicium amorphe, puis, passée cette température, à une poudre de carbure de silicium à plus de 99 % en poids sous la forme cristalline $\beta$ (aucune phase $\alpha$ détectable ; très faible teneur en SiO). Pour parfaire la transformation en SiC $\beta$, il peut être nécessaire de mener la pyrolyse jusqu'à environ 1100 - 1200°C.

Le rendement pondéral en carbure de silicium atteint 67 %, soit près de 96 % du rendement pondéral théorique susceptible d'être obtenu pour un polycarbosilane de stoechiométrie $SiC_2H_6$.

Ceci fait que les polycarbosilanes selon l'invention trouvent une application toute particulière dans la fabrication de produits et articles céramiques contenant, au moins en partie, du carbure de silicium.

Dans le cas le plus général, (obtention de poudres Si-C), on chauffe alors un polycarbosilane selon l'invention, dans une atmosphère inerte ou sous vide, à une température comprise entre 900°C et 1500°C, jusqu'à ce que le polycarbosilane soit converti entièrement en carbure de silicium.

Si l'on désire obtenir un produit mis en forme (fibres, filaments, etc...), on met alors le polycarbosilane à la forme d'article désiré avant de procéder au chauffage de façon à obtenir après chauffage un article céramique moulé à base de carbure de silicium.

On peut également bien entendu ajouter une charge céramique classique au polycarbosilane de l'invention, et ceci avant d'effectuer ladite mise en forme. Cette opération permet d'aboutir à des articles céramiques moulés contenant comme liant du carbure de silicium.

On peut enfin utiliser le mélange charge céramique-polycarbosilane décrit ci-avant pour le revêtement d'un support de forme quelconque (monolithe, plaque, fibre, etc...) et de nature diverse (métal, céramique, verre, alliage, etc ...) pour obtenir après chauffage un article revêtu de matière céramique contenant du carbure de silicium.

Dans le cas où le procédé ci-dessus conduit à des poudres, ces dernière peuvent alors être mises en forme puis frittées de manière classique pour obtenir des pièces céramiques en carbure de silicium.

Dans le cas où le procédé conduit à des fibres, celles-ci peuvent alors servir de structure de renforcement pour les matériaux composites céramique/céramique ou céramique/métal.

Des exemples illustrant l'invention vont maintenant être donnés.

Exemple 1

Cet exemple illustre un des modes de préparation du dichlorovinylhydrogénosilane utilisé comme produit de départ pour la préparation des polycarbosilanes selon l'invention.

Dans un monocol de 250 cm$^3$ surmonté d'un réfrigérant, on introduit 20 g (0,18 mol) de phénylsilane (Ø $SiH_3$) et 101 g (0,628 mole) de trichlorovinylsilane.

On additionne à ce mélange 5 cm$^3$ d'hexaméthylphosphotriamide redistillé sur sodium.

Après une demi-heure d'agitation sous azote, on distille directement un premier mélange de produits contenant du chlorodihydrogénovinylsilane, du dichlorovinylhydrogénosilane et du trichlorovinylsilane (plage

d'ébullition : 30-80° C). Une seconde distillation utilisant une colonne à garnissage permet d'isoler 25 g de dichlorovinylhydrogénosilane (température d'ébullition sous pression atmosphérique : 62° C).

Le rendement par rapport au trichlorovinylsilane de départ est de 37 % en poids.

Exemple 2

Cet exemple illustre la préparation du polydichlorosiléthylène à partir d'un dichlorovinylhydrogénosilane.

Dans un monocol de 100 $cm^3$ surmonté d'un grand réfrigérant et d'une arrivée d'azote, on mélange 20 g (0,16 mole) d'un dichlorovinylhydrogénosilane préparé selon l'exemple 1, et 30 µl d'une solution de catalyseur à base de $H_2PtCl_6$ dilué à 3,7 % en poids dans l'éthyl-2 hexanol.

Pour gagner du temps, on amorce la réaction par un léger chauffage.

La réaction est ensuite exothermique et très rapide. On obtient, après refroidissement, un solide blanc, possédant la stoechiométrie $SiC_2H_4Cl_2$ et identifié comme étant un polydichlorosiléthylène de formule

$$\left( \begin{matrix} Cl \\ | \\ Si \\ | \\ Cl \end{matrix} -CH_2-CH_2 \right)_n$$

Exemple 3

Cet exemple illustre la dernière étape de préparation du polycarbo silane selon l'invention.

A une première suspension obtenue par ajout de 13,36 g (0.35 mole) de $LiAlH_4$ dans 250 $cm^3$ d'éther anhydre et maintenue à 0° C, on rajoute, sous azote, une seconde suspension obtenue par ajout de 20 g du polydichlorosiléthylène, obtenu selon l'exemple 2, dans 150 $cm^3$ d'éther anhydre.

L'addition terminée, on laisse le mélange 4 heures à température ambiante.

On effectue ensuite une hydrolyse acide dans un mélange eau-glace-HCl.

La phase aqueuse est extraite 3 fois avec 200 $cm^3$ d'éther. Les phases étherées sont réunies puis séchées sur $MgSO_4$.

Le solvant est ensuite éliminé au rotavapor.

On obtient alors 7,7 g d'un résidu huileux, clair et transparent, avec un rendement de 82 % par rapport au polymère chloré de départ. Ce produit, de stoechiométrie $SiC_2H_6$, est identifié comme un polydihydrogénosiléthylène de formule :

$$\left( \begin{matrix} H \\ | \\ Si \\ | \\ H \end{matrix} -CH_2-CH_2 \right)_n$$

dans laquelle l'indice moyen n est compris entre 2 et 8.

Exemple 4

Cet exemple illustre le comportement à la pyrolyse des polycarbosilanes selon l'invention.

Le produit final obtenu dans l'exemple 3 est abord chauffé sous azote de 60° C à 450° C avec une montée en température de 1,5° C/mn. A 450° C on effectue un palier de 2 heures.

A l'issue de cette première étape, des volatils condensables se sont formés, ainsi que des volatils incondensables :

$H_2$ à partir de 250° C

$C_2H_4$ à partir de 400° C

$C_2H_6$ à partir de 400° C

Ces volatils correspondent à des produits de décomposition de la chaine carbonée.

On chauffe ensuite le produit de 450 à 950° C sous azote avec une montée en température de 1,5° C/mn.

Des produits volatils se dégagent : $H_2$, $CH_4$, $C_2H_4$, $C_3H_6$, $C_3H_8$, $C_4H_8$.

L'analyse élémentaire, en pourcentage en poids, du produit obtenu à 950° C est la suivante :

| Si | C | H | Autres |
|---|---|---|---|
| 67,7 | 31,5 | 0,1 | 0,7 |

Le produit a donc sensiblement la même analyse élémentaire que le Si-C (Si : 70 % - C : 30 %). Vers 1100° C,l'analyse RX ne permet de détecter que du SiC phase β. Le rendement pondéral en SiC ramené au produit de départ est de 67%.

**Revendications**

1/ Composition de matière caractérisée en ce qu'elle est essentiellement formée d'un polycarbosilane répondant à la formule moyenne (I) suivante :

$$\left( \underset{H}{\overset{H}{Si}}-CH_2-CH_2 \right)_n \qquad (I)$$

dans laquelle l'indice moyen n est au moins égal à 2.

2/ Composition de matière selon la revendication 1 caractérisée en ce que l'indice moyen n de la formule (I) est compris entre 2 et 100.

3/ Composition de matière selon la revendication 2 caractérisée en ce que ledit indice est compris entre 6 et 10.

4/ Procédé de fabrication d'une composition de matière telle que définie notamment par l'une quelconque des revendications précédentes, caractérisé en ce qu'il comprend les étapes suivantes :

(a) - on polymérise du dichlorovinylhydrogénosilane en présence d'une quantité catalytiquement efficace d'un métal ou d'un composé métallique catalysant la réaction d'hydrosilylation $\equiv$Si-H/$\equiv$Si-$CH=CH_2$

(b) - puis on réduit en milieu anhydre la composition obtenue en fin d'étape (a) au moyen d'un réducteur chimique permettant de substituer par des atomes d'hydrogène les atomes de chlore présents dans ladite composition.

5/ Procédé selon la revendication 4 caractérisé en ce que la polymérisation s'effectue en masse.

6/ Procédé selon la revendication 4 caractérisé en ce que la polymérisation s'effectue en solution dans un solvant organique.

7/ Procédé selon l'une quelconque des revendications 4 à 6 caractérisé en ce que la polymérisation se fait à une température comprise entre 50° C et 110° C.

8/ Procédé selon l'une quelconque des revendications 4 à 7 caractérisé en ce que le catalyseur de polymérisation utilisé est à base d'un métal choisi dans le groupe comprenant le platine, le palladium, le rhodium, l'iridium, le ruthénium et l'osmium.

9/ Procédé selon la revendication 8 caractérisé en ce que l'on utilise un catalyseur à base d'acide hexachloroplatinique.

10/Procédé selon l'une quelconque des revendications 4 à 9 caractérisé en ce que le réducteur chimique utilisé est un hydrure choisi dans le groupe comprenant l'hydrure d'aluminium et de lithium, l'hydrure de bore et de sodium, l'hydrure de sodium, l'hydrure d'aluminium, l'hydrure de lithium, l'hydrure de calcium et l'hydrure de magnésium.

11/Procédé selon la revendication 10 caractérisé en ce que l'on utilise l'hydrure d'aluminium et de sodium.

12/Procédé selon la revendication 10 caractérisé en ce que l'on utilise de l'hydrure de lithium en mélange avec une tris (dioxa-3, 6 heptyl) amine.

13/Procédé de préparation de produits et articles céramiques à base de carbure de silicium, caractérisé en ce que l'on chauffe une composition de matière telle que définie par l'une quelconque des revendications 1 à 3 ou susceptible d'être obtenue par un procédé tel que défini par l'une quelconque des revendications 4 à 12, dans une atmosphère inerte ou sous vide, à une température comprise entre 900 et 1500° C, jusqu'à ce que le polycarbosilane soit converti entièrement en carbure de silicium.

14/Procédé selon la revendication 13 caractérisé en ce que l'on met la composition de matière à une forme d'article désirée avant de procéder au chauffage de façon à obtenir après chauffage, un article céramique contenant du carbure de silicium.

15/Procédé selon la revendication 14 caractérisé en ce que l'on mélange une charge céramique classique à la composition de matière avant d'effectuer la mise en forme.

16/Procédé selon l'une quelconque des revendications 14 et 15 caractérisé en ce que ladite mise en forme consiste à revêtir un support.

17/Produits et articles céramiques contenant du carbure de silicium caractérisés en ce qu'ils ont été préparés par un procédé selon l'une quelconque des revendications 13 à 16.